# EUROPEAN PATENT APPLICATION

(11) **EP 4 597 431 A1**
(43) Date of publication of application: **06.08.2025**
(21) Application number: 25154604.0
(22) Date of filing: 29.01.2025
(51) Int. Cl.: G06T 11/60

(54) **METHOD AND SYSTEM FOR GENERATING IMAGES**

(30) Priority: 31.01.2024 KR 20240015288
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); LEE, Kangsoo, 06038 Seoul (KR)
(74) Representative: Studio Torta S.p.A.

(57) **Abstract**

Provided is a method for generating images, which is performed by one or more processors, and includes receiving a first dot associated with a first object, and generating a first synthesized image based on the first dot using an image generation model, in which the first dot includes first class information and first position information associated with the first object, and the first synthesized image is a synthesized image in which the first object corresponding to the first class information is placed at the first position.

## Description

### BACKGROUND

### Field

The present disclosure relates to a method and a system for generating images, and specifically, to a method and a system for receiving dots associated with a first object and generating a synthesized image based on the dots using an image generation model.

### Description of the Related Art

AI-based image generation technology generates new images based on inputs such as text and is making innovative progress with the development of the deep learning technology and generative models. This AI-based image generation technology is one of the research topics that have received immense attention in the field of computer vision and is used in various applications such as style transfer, image reinforcement, and image synthesis. For example, the related image generation technology inputs conditions into the image generation model to generate images.

Meanwhile, if text prompts are input as a condition for the image generation model, there is a problem that users cannot easily obtain the desired images because the text prompts are abstract. In addition, if an image is input as a condition for the image generation model, there is a problem that it is difficult for the user to modify the input image. In addition, if a bounding box is input as a condition for the image generation model, there is a problem that image generation fails if it deviates from the camera perspective that the image generation model inherently possesses.

### SUMMARY

In order to solve one or more problems (e.g., the problems described above and/or other problems not explicitly described herein), the present disclosure relates to a method and a system for generating images.

The present disclosure may be implemented in a variety of ways, including a method, a device (system) or a computer program stored in a readable storage medium.

A method for generating images is provided, which may include receiving a first dot associated with a first object, and generating a first synthesized image based on the first dot using an image generation model, in which the first dot may include first class information and first position information associated with the first object, and the first synthesized image may be a synthesized image in which the first object corresponding to the first class information is placed at the first position.

A background of the first synthesized image may be determined based on the first class information and the first position information.

A size of the first object may be determined based on the background of the first synthesized image, the first class information, and the first position information.

The method may further include receiving a second dot associated with the second object, in which the second dot may include second class information and second position information associated with the second object, and the first synthesized image may be a synthesized image in which the first object corresponding to the first class information is placed at the first position, and the second object corresponding to the second class information is placed at the second position.

A background of the first synthesized image may be determined based on the first class information, the first position information, the second class information, and the second position information.

The second dot may further include size information of the second object, a size of the second object placed in the first synthesized image may be determined based on the size information of the second object, and a size of the first object placed in the first synthesized image may be determined based on the background of the first synthesized image, the first class information, the first position information, the second class information, the second position information, and the size information of the second object.

The method may further include receiving an input to remove the second dot, and generating a second synthesized image based on the first dot using an image generation model, in which the second synthesized image may be a synthesized image that includes the first object and from which the second object has been removed.

The method may further include receiving an input to change the second class information associated with the second dot to third class information, and generating a third synthesized image based on the first dot and the second dot using the image generation model, in which the third synthesized image may be a synthesized image in which the first object corresponding to the first class information is placed at the first position and a third object corresponding to the third class information is placed at the second position.

The first dot may be generated by a user selecting a specific position on a display and inputting class information associated with the specific position.

The generating the first synthesized image may include receiving condition information associated with the first object, and generating the first synthesized image based on the first dot and the condition information using the image generation model, in which the condition information may represent structural information of a background and objects in the first synthesized image.

The condition information may include at least one of text prompt information, collage information, image information, layout information, bounding box information, or edge information.

The image generation model may be trained by receiving a training segmentation map and a training image corresponding to the training segmentation map, extracting training dot data based on the training segmentation map, and using pairs of the training dot data and the training image as training data.

There is provided a non-transitory computer-readable recording medium recording instructions for executing the method according to the aspects of the present disclosure.

A system may include a communication module, a memory, and one or more processors connected to the memory and configured to execute one or more computer-readable programs included in the memory, in which the one or more programs may include instructions for receiving a first dot associated with a first object, and generating a first synthesized image based on the first dot using an image generation model, the first dot may include first class information and first position information associated with the first object, and the first synthesized image may be a synthesized image in which the first object corresponding to the first class information is placed at the first position.

According to some aspects of the present disclosure, user can conveniently generate an image using the dots. In addition, the composition of the image can be adjusted regardless of the camera perspective of the image generation model. Additionally, the user can easily modify the class information, the position information, and the size information of the dot to change the input and obtain a desired image.

According to some aspects of the present disclosure, the user can conveniently determine the type and position of the object through the dots. In addition, since the color of the dot varies according to the object to be generated, the user can easily identify an object to be generated based on the color of the dot. Additionally, the user can conveniently generate a desired image without inputting additional information such as size, because the user may only specify the type and position of the object when generating the dot, and then the image generation model automatically determines the size of the object by considering other objects to be included in the image.

According to some aspects of the present disclosure, the user can conveniently change an object associated with a specific dot. Accordingly, the user can easily change the object in the generated image to obtain a desired image.

According to some aspects of the present disclosure, the user can conveniently remove the object associated with the specific dot. Accordingly, the user can easily remove the object in the generated image to obtain a desired image.

The effects of the present disclosure are not limited to the effects described above, and other effects not described herein can be clearly understood by those of ordinary skill in the art (referred to as "ordinary technician") from the description of the claims.

### BRIEF DESCRIPTION OF DRAWINGS

Aspects of the present disclosure will be described with reference to the accompanying drawings described below, where similar reference numerals indicate similar elements, but is not limited thereto, in which:
FIG. 1 illustrates an example of a method for generating images;
FIG. 2 is a schematic diagram illustrating a configuration in which an information processing system is communicatively connected to a plurality of user terminals to generate images;
FIG. 3 is a block diagram of an internal configuration of the user terminal and the information processing system;
FIG. 4 is a diagram illustrating an example of a dot image including a plurality of dots;
FIG. 5 is a diagram illustrating an example of a synthesized image;
FIG. 6 is a diagram illustrating an example of a synthesized layout image;
FIG. 7 is a diagram illustrating an example of setting dot size information;
FIG. 8 is a diagram illustrating an example of changing class information of the dots;
FIG. 9 is a diagram illustrating an example of removing an object associated with the dots;
FIG. 10 is a flowchart provided to explain an example of a method 1000 for training an image generation model; and
FIG. 11 is a flowchart provided to explain an example of a method for generating images.

### DETAILED DESCRIPTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are given the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it intends to mean that the portion may additionally comprise (or include or have) another component, rather than excluding the same, unless specified to the contrary.

Further, the term "module" or "unit" as used herein refers to a software or hardware component, and the "module" or the "unit" performs certain roles. However, the meaning of the "module" or "unit" is not limited to software or hardware. The "module" or "unit" may be configured to be in an addressable storage medium or configured to execute one or more processors. Accordingly, as an example, the "module" or "unit" may include components such as software components, object-oriented software components, class components, and task components, and at least one of processes, functions, attributes, procedures, subroutines, program code segments, drivers, firmware, micro-codes, circuits, data, database, data structures, tables, arrays, or variables. Functions provided in the components and the "modules" or "units" may be combined into a smaller number of components and "modules" or "units", or further divided into additional components and "modules" or "units."

The "module" or "unit" may be implemented as a processor and a memory. The "processor" should be interpreted broadly to encompass a general-purpose processor, a central processing unit (CPU), a microprocessor, a digital signal processor (DSP), a controller, a microcontroller, a state machine, etc. Under some circumstances, the "processor" may refer to an application-specific integrated circuit (ASIC), a programmable logic device (PLD), a field-programmable gate array (FPGA), etc. The "processor" may refer to a combination of processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, etc. The memory is said to be in electronic communication with a processor if the processor can read information from and/or write information to the memory. The memory integrated with the processor is in electronic communication with the processor.

In the present disclosure, a "system" may refer to at least one of a server apparatus and a cloud apparatus, but is not limited thereto. For example, the system may include one or more server apparatus. In another example, the system may include one or more cloud apparatus. In still another example, the system may include both the server apparatus and the cloud apparatus operated in conjunction with each other.

In the present disclosure, a "display" may refer to any display device associated with a computing device, and for example, it may refer to any display device that is controlled by the computing device, or that can display any information/data provided from the computing device.

In the present disclosure, "each of a plurality of A's" may refer to each of all components included in the plurality of A's, or may refer to each of some of the components included in the plurality of A's.

In the present disclosure, the "machine learning model" may include any model that is used to infer an answer to a given input. The machine learning model may include an artificial neural network model including an input layer, a plurality of hidden layers, and an output layer. Each layer may include a plurality of nodes. In the present disclosure, each of the plurality of machine learning models is described as a separate machine learning model, but aspects are not limited thereto, and some or all of the plurality of machine learning models may be implemented as a single machine learning model. In addition, a single machine learning model may include a plurality of machine learning models. In the present disclosure, terms such as a machine learning model and an artificial neural network model may be used interchangeably to represent the same or similar model. In the present disclosure, an "image generation model" may mean a machine learning model or an artificial neural network model that infers and generates an image for a given input.

In the present disclosure, a "dot" may refer to a vector including class information and position information (e.g., x and y coordinates) that forms an image. The class information may represent a specific object (e.g., road, building, passenger car, bus, etc.). In this case, the dot may be represented by a vector in the form of [class, x, y]. Additionally, the dot may further include size information (e.g., width w and height h) of an object. In this case, the dot may be represented by a vector in the form of [class, x, y, w, h].

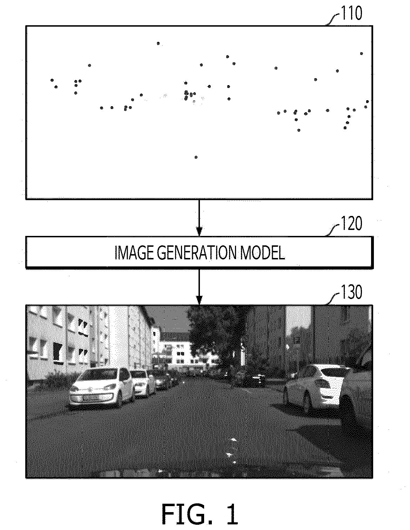

FIG. 1 illustrates an example of a method for generating images. One or more processors (e.g., a processor of an information processing system) may receive dots associated with a specific object. Additionally or alternatively, the processor may receive a dot image 110 including a plurality of dots. In this case, the processor may generate a synthesized image 130 based on the received dots (or a plurality of dots included in the dot image 110) using an image generation model 120. The image generation model 120 may be a diffusion model, but is not limited thereto.

The image generation model 120 may generate the synthesized image 130 based on input dots. The dots may include class information and position information associated with a specific object. In this case, the synthesized image 130 may be a synthesized image in which a specific object corresponding to the class information is placed at a specific position. For example, if a first dot includes first class information and first position information associated with a first object, the image generation model 120 may generate the synthesized image 130 in which the first object corresponding to the first class information is placed at the first position.

The image generation model 120 may generate the synthesized image 130 based on a plurality of dots. For example, if the first dot and a second dot including second class information and second position information associated with a second object are received, the image generation model 120 may generate the synthesized image 130 in which the first object corresponding to the first class information is placed at the first position and the second object corresponding to the second class information is placed at the second position.

A background of the synthesized image 130 may be determined based on information included in the dot. Specifically, if the first dot is received, the background of the synthesized image 130 may be determined based on the first class information and the first position information. In addition, if the first dot and the second dot are received, the background of the synthesized image 130 may be determined based on the first class information, the first position information, the second class information, and the second position information. For example, if there is a road placed in the center of the synthesized image 130 with vehicles placed on both sides of the road, buildings and the sky may be determined as the background of the synthesized image 130.

The dot may further include size information of the object. In this case, the size of the object corresponding to the class information may be determined based on the size information included in the dot. Alternatively, if the dot does not include the size information of the object, the size of the object corresponding to the class information may be determined based on the background, the class information and the position information of the synthesized image 130, and on information associated with other dots. For example, if the first dot does not include the size information and the second dot includes the size information, the size of the first object placed in the synthesized image 130 may be determined based on the background of the synthesized image 130, the first class information, the first position information, the second class information, the second position information, and the size information of the second object.

The processor may further receive condition information associated with the object. In this case, the image generation model 120 may generate the synthesized image 130 based on the dot and the condition information. The condition information may represent structural information of the background and objects in the synthesized image 130. For example, the condition information may include text prompt information, collage information, image information, layout information, bounding box information, edge information, etc. For example, if a user inputs "Make the background a cloudy sky" as the text prompt, the image generation model 120 may generate the synthesized image 130 with the background with the cloudy sky based on the dot and the text prompt. As another example, if the user inputs sketched edge information of a boundary line of an object, the image generation model 120 may generate the synthesized image 130 in which the object is placed along the boundary line based on the dot and the edge information. Accordingly, the user may generate the synthesized image 130 desired by the user more easily by inputting the condition information.

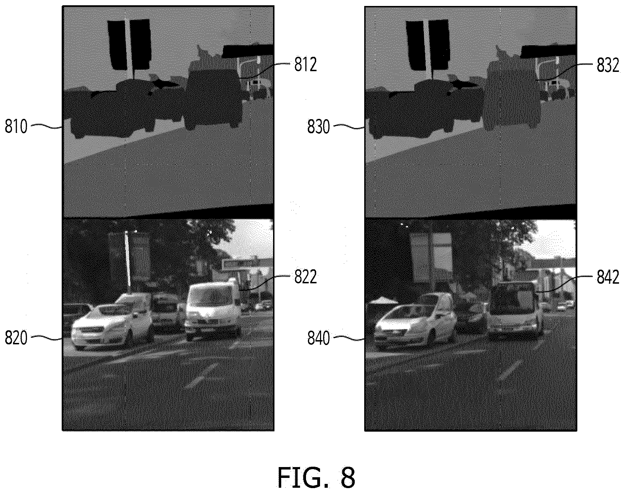

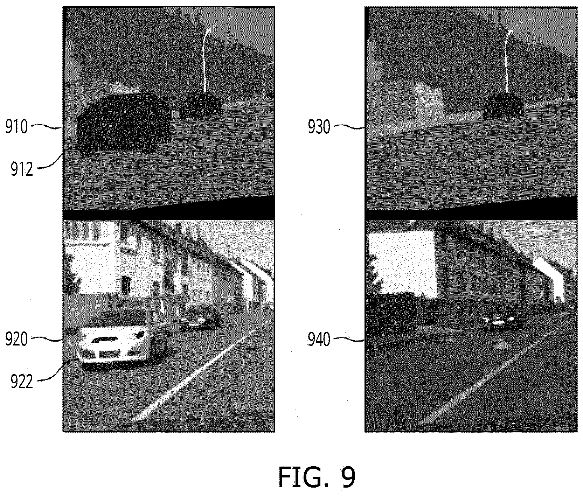

The user may select a specific position on a display with a click, etc. and input class information associated with the specific position to generate a dot. In addition, by removing specific dots, the user may obtain a synthesized image using the image generation model 120, from which an object associated with the removed dots is removed. Additionally, by modifying class information associated with a specific dot, the user may obtain the synthesized image 130 using the image generation model 120, in which an object associated with the modified dot is placed. An example of modifying a specific dot will be described in detail below with reference to FIG. 8, and an example of removing a specific dot will be described in detail below with reference to FIG. 9.

With this configuration, the user may conveniently generate images using the dots. In addition, the composition of the image may be adjusted regardless of the camera perspective of the image generation model. Additionally, the user may easily modify the class information, the position information, and the size information of the dot to change the input and obtain a desired image.

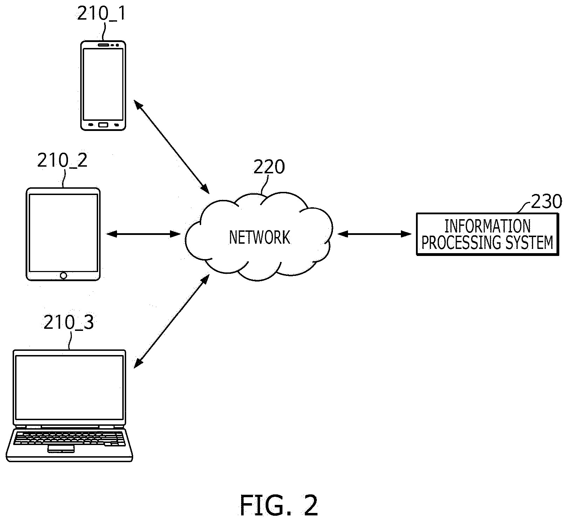

FIG. 2 is a schematic diagram illustrating a configuration in which an information processing system 230 is communicatively connected to a plurality of user terminals 210_1, 210_2, and 210_3 to generate an image. As shown, the plurality of user terminals 210_1, 210_2, and 210_3 may be connected to the information processing system 230 that may provide an image generation service through a network 220. The plurality of user terminals 210_1, 210_2, and 210_3 may include a user terminal provided with the image generation service.

The information processing system 230 may include one or more server apparatus and/or databases capable of storing, providing, and executing computer-executable programs (e.g., downloadable applications) and data associated with providing an image generation service, or one or more distributed computing devices and/or distributed databases based on cloud computing services.

The image generation service provided by the information processing system 230 may be provided to the user through an image generation service application, a web browser, a web browser extension program, etc. installed in each of the plurality of user terminals 210_1, 210_2, and 210_3. For example, the information processing system 230 may provide information or perform processing corresponding to an image generation request received from the user terminals 210_1, 210_2, and 210_3 through the image generation service application, etc.

The plurality of user terminals 210_1, 210_2, and 210_3 may communicate with the information processing system 230 through the network 220. The network 220 may be configured to enable communication between the plurality of user terminals 210_1, 210_2, and 210_3 and the information processing system 230. The network 220 may be configured as a wired network such as Ethernet, a wired home network (Power Line Communication), a telephone line communication device and RS-serial communication, a wireless network such as a mobile communication network, a wireless LAN (WLAN), Wi-Fi, Bluetooth, and ZigBee, or a combination thereof, depending on the installation environment. The method of communication may include a communication method using a communication network (e.g., mobile communication network, wired Internet, wireless Internet, broadcasting network, satellite network, etc.) that may be included in the network 220 as well as short-range wireless communication between the user terminals 210_1, 210_2, and 210_3, but aspects are not limited thereto.

In FIG. 2, a mobile phone terminal 210_1, a tablet terminal 210_2, and a PC terminal 210_3 are illustrated as the examples of the user terminals, but aspects are not limited thereto, and the user terminals 210_1, 210_2, and 210_3 may be any computing device that is capable of wired and/or wireless communication and that can be installed with an image generation service application, the web browser, etc. and execute the same. For example, the user terminal may include an AI speaker, a smart phone, a mobile phone, a navigation, a computer, a notebook, a digital broadcasting terminal, a personal digital assistant (PDA), a portable multimedia player (PMP), a tablet PC, a game console, a wearable device, an internet of things (IoT) device, a virtual reality (VR) device, an augmented reality (AR) device, a set-top box, etc. In addition, FIG. 2 illustrates that three user terminals 210_1, 210_2, and 210_3 are in communication with the information processing system 230 through the network 220, but aspects are not limited thereto, and a different number of user terminals may be configured to be in communication with the information processing system 230 through the network 220.

FIG. 2 illustrates a configuration in which a user request (e.g., an image generation request) is transmitted to the information processing system 230 through the user terminals 210_1, 210_2, and 210_3, but aspects are not limited thereto, and the user request may be provided to the information processing system 230 through an input device associated with the information processing system 230 without passing through the user terminals 210_1, 210_2, and 210_3, and the result (e.g., a synthesized image) of processing the user request may be provided to the user via an output device (e.g., a display, etc.) associated with the information processing system 230.

FIG. 2 illustrates that the user terminals 210_1, 210_2, and 210_3 receive the image generation service from the information processing system 230, but aspects are not limited thereto. For example, the image generation service may be provided through the image generation program/application installed in the user terminals 210_1, 210_2, and 210_3 without communication with the information processing system 230. In addition, although the information processing system 230 is illustrated as a single device, aspects are not limited thereto, and the information processing system 230 may include a plurality of devices.

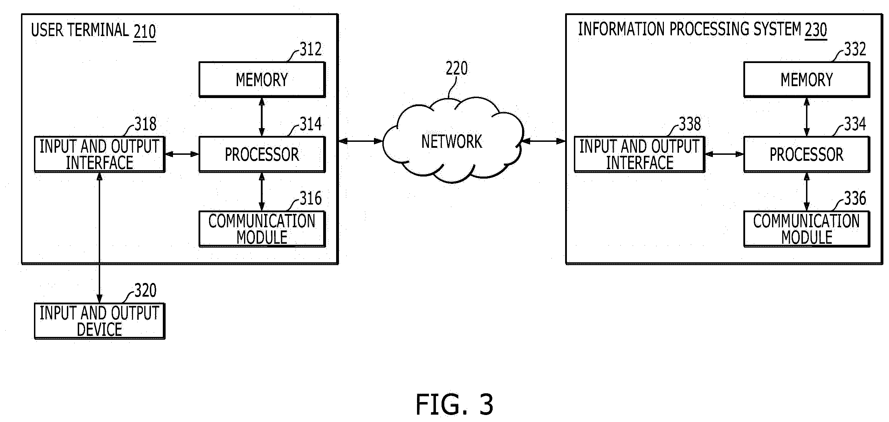

FIG. 3 is a block diagram of an internal configuration of a user terminal 210 and the information processing system 230. The user terminal 210 may refer to any computing device that is capable of executing the application, web browsers, etc., and also capable of wired/wireless communication, and may include the mobile phone terminal 210_1, the tablet terminal 210_2, and the PC terminal 210_3 of FIG. 2, for example. As illustrated, the user terminal 210 may include a memory 312, a processor 314, a communication module 316, and an input/output interface 318. Likewise, the information processing system 230 may include a memory 332, a processor 334, a communication module 336, and an input/output interface 338. As illustrated in FIG. 3, the user terminal 210 and the information processing system 230 may be configured to communicate information, data, etc. through the network 220 using respective communication modules 316 and 336. In addition, an input/output device 320 may be configured to input information, data, etc. to the user terminal 210, or output information, data, etc. generated from the user terminal 210 through the input/output interface 318.

The memories 312 and 332 may include any non-transitory computer-readable recording medium. The memories 312 and 332 may include a permanent mass storage device such as read only memory (ROM), disk drive, solid state drive (SSD), flash memory, etc. As another example, a non-destructive mass storage device such as ROM, SSD, flash memory, disk drive, etc. may be included in the user terminal 210 or the information processing system 230 as a separate permanent storage device that is distinct from the memory. In addition, an operating system and at least one program code may be stored in the memories 312 and 332.

These software components may be loaded from a computer-readable recording medium separate from the memories 312 and 332. Such a separate computer-readable recording medium may include a recording medium directly connectable to the user terminal 210 and the information processing system 230, and may include a computer-readable recording medium such as a floppy drive, a disk, a tape, a DVD/CD-ROM drive, a memory card, etc., for example. As another example, the software components may be loaded into the memories 312 and 332 through the communication modules 316 and 336 rather than the computer-readable recording medium. For example, at least one program may be loaded into the memories 312 and 332 based on a computer program installed by files provided by developers or a file distribution system that distributes an installation file of an application through the network 220.

The processors 314 and 334 may be configured to process the instructions of the computer program by performing basic arithmetic, logic, and input/output operations. The instructions may be provided to the processors 314 and 334 from the memories 312 and 332 or the communication modules 316 and 336. For example, the processors 314 and 334 may be configured to execute the received instructions according to a program code stored in a recording device such as the memories 312 and 332.

The communication modules 316 and 336 may provide a configuration or function for the user terminal 210 and the information processing system 230 to communicate with each other through the network 220, and may provide a configuration or function for the user terminal 210, the information processing system 230, etc. to communicate with another user terminal or another system (e.g., a separate cloud system, etc.). For example, a request or data (e.g., a request to generate an image, etc.) generated by the processor 314 of the user terminal 210 according to a program code stored in the recording device such as the memory 312 may be transmitted to the information processing system 230 through the network 220 under the control of the communication module 316. Conversely, a control signal or command provided under the control of the processor 334 of the information processing system 230 may be sent through the communication module 336 and the network 220 and received by the user terminal 210 through the communication module 316 of the user terminal 210.

The input/output interface 318 may be a means for interfacing with the input/output device 320. As an example, the input device may include a device such as a camera including an audio sensor and/or an image sensor, a keyboard, a microphone, a mouse, etc., and the output device may include a device such as a display, a speaker, a haptic feedback device, etc. As another example, the input/output interface 318 may be a means for interfacing with a device such as a touch screen, etc. that incorporates a configuration or function for performing inputting and outputting. For example, when the processor 314 of the user terminal 210 processes the instructions of the computer program loaded into the memory 312, a service screen, etc., which is configured with the information, data, etc. provided by the information processing system 230 or another user terminals, may be displayed on the display through the input/output interface 318. While FIG. 3 illustrates that the input/output device 320 is not included in the user terminal 210, aspects are not limited thereto, and an input/output device may be configured as a single device with the user terminal 210. In addition, the input/output interface 338 of the information processing system 230 may be a means for interfacing with a device (not illustrated) for inputting or outputting, which may be connected to or included in the information processing system 230. While FIG. 3 illustrates the input/output interfaces 318 and 338 as the components configured separately from the processors 314 and 334, aspects are not limited thereto, and the input/output interfaces 318 and 338 may be configured to be included in the processors 314 and 334.

The user terminal 210 and the information processing system 230 may include more components than those illustrated in FIG. 3. Meanwhile, most of the related components may not necessarily require exact illustration. The user terminal 210 may be implemented to include at least a part of the input/output device 320 described above. In addition, the user terminal 210 may further include another component such as a transceiver, a global positioning system (GPS) module, a camera, various sensors, a database, etc. For example, if the user terminal 210 is a smartphone, it may include components generally included in the smartphone, and for example, it may be implemented such that various components such as an acceleration sensor, a gyro sensor, a microphone module, a camera module, various physical buttons, buttons using a touch panel, input/output ports, a vibrator for vibration, etc. are further included in the user terminal 210.

While the program or application for the image generation service, etc. is being operated, the processor 314 may receive text, image, video, voice and/or operation, etc. input or selected through an input device such as a touch screen connected to the input/output interface 318, a keyboard, a camera including audio sensor and/or image sensor, a microphone, etc., and may store the received text, image, video, voice, and/or operation, etc. in the memory 312 or provide the same to the information processing system 230 through the communication module 316 and the network 220.

The processor 314 of the user terminal 210 may be configured to manage, process and/or store the information, data, etc. received from the input/output device 320, another user terminal, the information processing system 230, a plurality of external systems, etc. The information, data, etc. processed by the processor 314 may be provided to the information processing system 230 through the communication module 316 and the network 220. The processor 314 of the user terminal 210 may send the information, data, etc. to the input/output device 320 through the input/output interface 318 to output the same. For example, the processor 314 may output or display the received information and/or data on a screen associated with the user terminal 210.

The processor 334 of the information processing system 230 may be configured to manage, process, and/or store information, data, etc. received from a plurality of user terminals 210, a plurality of external systems, etc. The information, data, etc. processed by the processor 334 may be provided to the user terminals 210 through the communication module 336 and the network 220.

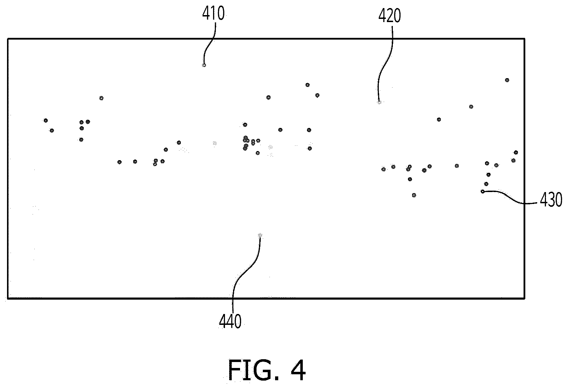

FIG. 4 is a diagram illustrating an example of a dot image including a plurality of dots. The user may input a plurality of dots. Specifically, the user may select a specific position on the display with a click, etc. and input class information associated with a specific object to generate dots. Accordingly, the dots may include class information and position information associated with the object. For example, a first dot 410 may include class information associated with the sky, and a second dot 420 may include class information associated with the building. In addition, a third dot 430 may include class information associated with the terrain, and a fourth dot 440 may include class information associated with the road.

Specific class information may be associated with the specific object. The dots may be displayed in different colors according to the class information. For example, the first dot 410 may be displayed in sky blue, and the second dot may be displayed in gray. The colors corresponding to the specific objects are only examples for convenience of description, and aspects are not limited thereto. For example, the class information may be stored in the form of text, code, etc.

The user may modify the information included in a plurality of dots. For example, the user may modify the class information of the first dot 410. Accordingly, the object associated with the first dot 410 may be changed. As another example, the user may change the position of the first dot 410 by dragging, etc.

With this configuration, the user may conveniently determine the type and position of the object through the dots. In addition, since the color of the dot varies according to the object to be generated, the user may easily identify an object to be generated based on the color of the dot. Additionally, the user may conveniently generate a desired image without inputting additional information such as size, because the user may only specify the type and position of the object when generating the dot, and then the image generation model automatically determines the size of the object by considering other objects to be included in the image.

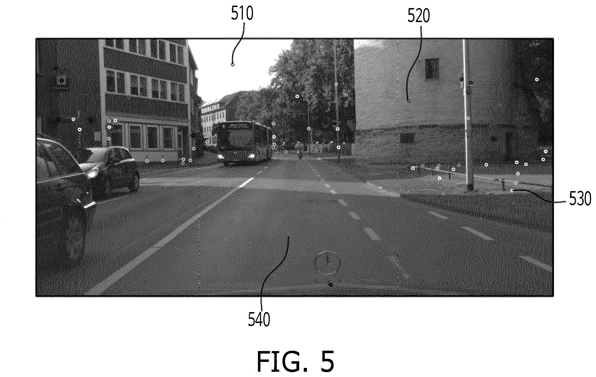

FIG. 5 is a diagram illustrating an example of a synthesized image. The user may generate a plurality of dots and input the dots to the image generation model to obtain a synthesized image. For example, the synthesized image of FIG. 5 may be generated by the user inputting the plurality of dots of FIG. 4 into the image generation model. Accordingly, the synthesized image may be generated, including a sky corresponding to a first dot 510, a building corresponding to a second dot 520, a terrain corresponding to a third dot 530, a road corresponding to a fourth dot 540, etc., which are placed according to each position information. The size, shape, color, etc. of the sky, building, terrain, road, etc. may be automatically determined/generated by the image generation model.

The background of the synthesized image may be determined based on the information included in the dot. Specifically, the background (or, that is, a region where there is no dot) of the synthesized image may be determined based on the class information, the position information, etc. included in a plurality of dots. For example, the second dot 520 may be associated with the building, and accordingly, building windows, doors, etc. may be generated as a background near the second dot 520. As another example, the first dot 510 may be associated with the sky, and accordingly, clouds, birds, airplanes, etc. may be generated as a background near the first dot 510.

The image generation model may generate a synthesized image by using the position information included in the dot as a soft constraint. Specifically, the image generation model may apply the position information as the soft constraint, allowing the position of the object represented by the dot to be less strictly dependent on the position information of the dot, and enabling the size of the objects associated with each dot to be determined/generated in a way that appears natural when viewed in the context of the entire image. As a result, the image generation model may generate a synthesized image in which the object is at a more natural and realistic position.

FIG. 5 illustrates that a plurality of dots are displayed together on the synthesized image, but aspects are not limited thereto. For example, by selecting a disable button, etc. to prevent a plurality of dots from being displayed, the user may prevent a plurality of dots from being displayed in the synthesized image. In addition, by selecting a synthesized image regeneration button, etc., the user may generate a new synthesized image based on a plurality of input dots.

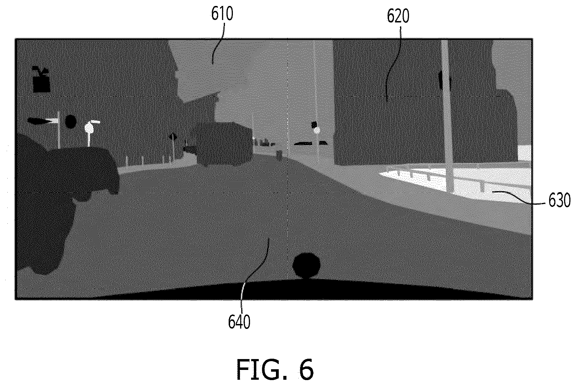

FIG. 6 is a diagram illustrating an example of a synthesized layout image. The user may generate a plurality of dots and input the dots to the image generation model to obtain a synthesized layout image. For example, the synthesized layout image of FIG. 6 may be generated by the user inputting the plurality of dots of FIG. 4 into the image generation model. For example, the layout image may be a semantic segmentation image. Accordingly, the synthesized layout image may be generated, including a sky layout placed in a first region 610, a building layout placed in a second region 620, a terrain layout placed in a third region 630, and a road layout placed in a fourth region 640. The layouts corresponding to each of the plurality of dots do not overlap with one another's regions and may display class information in a form similar to the layout of the actual image.

The background of the synthesized layout image may be determined based on the information included in the dot. Specifically, the background (or, that is, a region where there is no dot) of the synthesized layout image may be determined based on the class information, the position information, etc. included in a plurality of dots.

The color included in the synthesized layout image may correspond to the colors of a plurality of dots input by the user. For example, if a first dot input by the user is displayed in sky blue in association with the sky, the layout color of the first region 610 corresponding to the first dot may also be displayed in sky blue.

The generated synthesized layout image may represent structural information of the background and the objects in the synthesized image. Accordingly, the generated synthesized layout image may be used as the condition information input to the image generation model. In this case, the image generation model may generate a synthesized image based on a plurality of dots and the layout image.

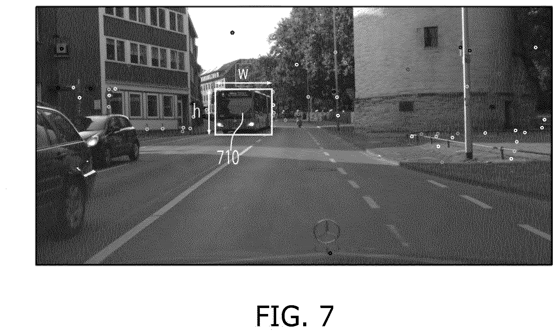

FIG. 7 is a diagram illustrating an example of setting dot size information. Some dots may include the size information of the object. In this case, the user may select a specific position on the display with a click, etc., and input class information associated with the specific object, and the size information of the specific object to generate a dot. Accordingly, some dots may include the class information, the position information, and the size information associated with the object.

The size of the object included in the synthesized image may be determined based on the size information included in the dot. For example, if the user inputs a width w and a height h as the size information of a dot 710 associated with a city bus, the size of the city bus corresponding to the dot 710 included in the synthesized image may be the same as or similar to the size w × h.

The size of the object included in the synthesized image may be determined based on the information included in the dot and the background of the synthesized image. For example, if the user does not input the size information of the dot associated with the building, the size of the building may be determined based on the background of the synthesized image, the class information and the position information associated with the object (i.e., the building) of the dot. Additionally, the size of the object may be determined based on not only the background of the synthesized image and the dot representing the object, but also the information included in other dots.

The image generation model may generate a synthesized image by using the size information included in certain dots as a hard constraint. Specifically, the image generation model may apply the size information as the hard constraint to determine the size of the object so that the size of the object represented by the dot is dependent on the size information of the dot. Accordingly, the image generation model may generate a synthesized image in which the object having the size intended by the user is placed. On the other hand, for the remaining dots that do not include size information, the image generation model may determine/generate the size of the object associated with the dot to be a natural size when viewed in the context of the entire image.

FIG. 8 is a diagram illustrating an example of changing class information of the dots. The user may change the class information included in a specific dot. Specifically, by selecting a specific dot with a click, etc., the user may view the class information. In addition, the user may modify the class information to change the object represented by a specific dot. In this case, the position of the changed object may be the same as the position of the previous object, although the position of the object may also be changed by user selection.

For example, if the first class information associated with the specific dot represents a passenger car, the image generation model may generate a first synthesized layout image 810 including a layout 812 of the passenger car associated with the specific dot. Additionally or alternatively, the image generation model may generate a first synthesized image 820 including a passenger car 822 associated with the specific dot. If the user changes the first class information associated with the specific dot to the second class information associated with the bus, the image generation model may generate a second synthesized layout image 830 including a layout 832 of the bus associated with the specific dot. Additionally or alternatively, the image generation model may generate a second synthesized image 840 including a city bus 842 associated with the specific dot.

With this configuration, the user may conveniently change the object associated with the specific dot. Accordingly, the user can easily change the object in the generated image to obtain a desired image.

FIG. 9 is a diagram illustrating an example of removing an object associated with the dots. The user may remove the specific object from the synthesized image by removing the dot. Specifically, the user may select a specific dot to be removed with a click, etc., and remove an object associated with the selected dot through a remove button, etc. Alternatively, the user may select a specific dot to be removed with a click, etc., and change the class information of the specific dot to 0 (or null) to remove the object associated with the selected dot. In this case, the image generation model may generate a synthesized image from which only the object associated with the dot removed from the previous synthesized image has been removed. Additionally or alternatively, the image generation model may generate a new synthesized image based on the remaining dots except for the removed dot.

For example, if the class information associated with a specific dot represents a passenger car, the image generation model may generate a first synthesized layout image 910 including a layout 912 of the passenger car associated with the specific dot. Additionally or alternatively, the image generation model may generate a first synthesized image 920 including a passenger car 922 associated with the specific dot. If the user removes a specific dot or changes the class information associated with the specific dot to 0 (or null), the image generation model may generate a second synthesized layout image 930 from which the passenger car layout associated with the specific dot has been removed. Additionally or alternatively, the image generation model may generate a second synthesized image 940 from which the passenger car associated with the specific dot has been removed.

With this configuration, the user may conveniently remove the object associated with the specific dot. Accordingly, the user can easily remove the object in the generated image to obtain a desired image.

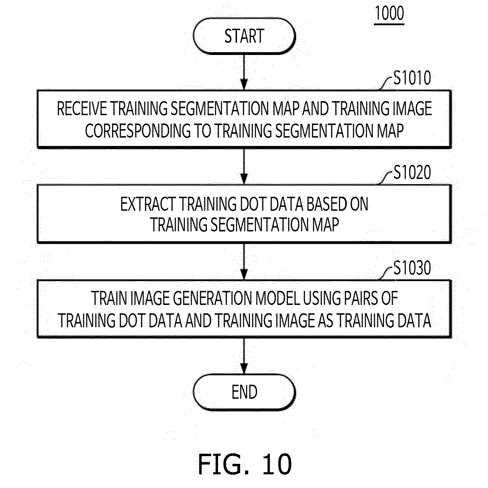

FIG. 10 is a flowchart provided to explain an example of a method 1000 for training image generation model. The method 1000 may be performed by one or more processors. The method 1000 may be initiated by the processor receiving a training segmentation map and a training image corresponding to the training segmentation map, at S1010.

The processor may extract training dot data based on the training segmentation map, at S1020. In addition, the processor may train the image generation model using pairs of training dot data and training image as training data, at S1030. Additionally, the processor may train the image generation model using pairs of training dot data and training segmentation map as the training data.

The processor may extract condition information from the training image. The condition information may include at least one of text prompt information, collage information, image information, layout information, bounding box information, or edge information. In this case, the processor may train the image generation model using the pairs of training dot data, condition information, and training image as the training data.

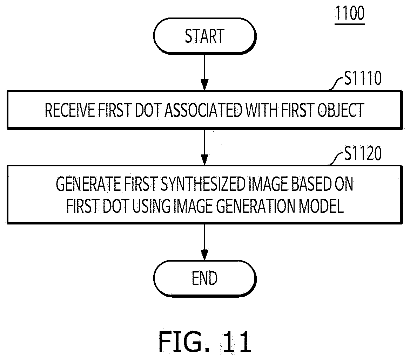

FIG. 11 is a flowchart provided to explain an example of a method 1100 for generating an image. The method 1100 may be performed by one or more processors (one or more processors of the user terminal or the information processing system). The method 1100 may be initiated by the processor receiving a first dot associated with a first object, at S1110. The first dot may include first class information and first position information associated with the first object. In addition, the first dot may be generated by the user selecting a specific position on the display and inputting class information associated with the specific position.

The processor may generate a first synthesized image based on the first dot using the image generation model, at S 1120. The first synthesized image may be a synthesized image in which the first object corresponding to the first class information is placed at the first position. In addition, the background of the first synthesized image may be determined based on the first class information and the first position information. Additionally, the size of the first object may be determined based on the background of the first synthesized image, the first class information and the first position information.

The processor may receive a second dot associated with a second object. The second dot may include second class information and second position information associated with the second object. In this case, the first synthesized image may be a synthesized image in which the first object corresponding to the first class information is placed at the first position and the second object corresponding to the second class information is placed at the second position. The background of the first synthesized image may be determined based on the first class information, the first position information, the second class information, and the second position information.

The second dot may further include size information of the second object. In this case, the size of the second object placed in the first synthesized image may be determined based on the size information of the second object. In addition, the size of the first object placed in the first synthesized image may be determined based on the background of the first synthesized image, the first class information, the first position information, the second class information, the second position information, and the size information of the second object.

The processor may receive an input to remove the second dot. In addition, the processor may generate a second synthesized image based on the first dot using the image generation model. The second synthesized image may be a synthesized image that includes the first object and from which the second object has been removed.

The processor may receive an input to change the second class information associated with the second dot to third class information. In addition, the processor may generate a third synthesized image based on the first dot and the second dot using the image generation model. The third synthesized image may be a synthesized image in which the first object corresponding to the first class information is placed at the first position and the third object corresponding to the third class information is placed at the second position.

The processor may receive condition information associated with the first object. In this case, the processor may generate a first synthesized image based on the first dot and the condition information using the image generation model. The condition information may represent structural information of a background and objects in the first synthesized image. Further, the condition information may include at least one of text prompt information, collage information, image information, layout information, bounding box information, or edge information.

The method described above may be provided as a computer program stored in a computer-readable recording medium for execution on a computer. The medium may be a type of medium that continuously stores a program executable by a computer, or temporarily stores the program for execution or download. In addition, the medium may be a variety of recording means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, a ROM, a RAM, a flash memory, etc. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software depends on design requirements imposed on the particular application and the overall system. Those skilled in the art may implement the described functions in varying ways for each particular application, but such implementation should not be interpreted as causing a departure from the scope of the present disclosure.

In hardware implementations, the processing units used to perform techniques may be implemented in one or more ASICs, DSPs, GPUs, digital signal processing devices (DSPDs), programmable logic devices (PLDs), field programmable gate arrays (FPGAs), processors, controllers, microprocessors, electronic devices, other electronic units designed to perform the functions described in the present disclosure, computers, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The instructions may be executable by one or more processors, and may cause the processor(s) to perform certain aspects of the functions described in the present disclosure.

When implemented in software, the techniques may be stored on a computer-readable medium as one or more instructions or codes, or may be transmitted through a computer-readable medium. The computer-readable media include both the computer storage media and the communication media including any medium that facilitates the transmission of a computer program from one place to another. The storage media may also be any available media that may be accessible to a computer. By way of non-limiting example, such a computer-readable medium may include RAM, ROM, EEPROM, CD-ROM or other optical disk storage, magnetic disk storage or other magnetic storage devices, or any other media that can be used to transmit or store desired program code in the form of instructions or data structures and can be accessible to a computer. Further, any access is suitably performed on a computer-readable medium.

For example, if the software is sent from a website, server, or other remote sources using coaxial cable, fiber optic cable, twisted pair, digital subscriber line (DSL), or wireless technologies such as infrared, wireless, and microwave, the coaxial cable, the fiber optic cable, the twisted pair, the digital subscriber line, or the wireless technologies such as infrared, wireless, and microwave are included within the definition of the medium. The disks and the discs used herein include CDs, laser disks, optical disks, digital versatile discs (DVDs), floppy disks, and Blu-ray disks, where disks usually magnetically reproduce data, while discs optically reproduce data using a laser. The combinations described above should also be included within the scope of the computer-readable media.

The software module may reside in RAM memory, flash memory, ROM memory, EPROM memory, EEPROM memory, registers, hard disk, removable disk, CD-ROM, or any other form of storage medium known. An example storage medium may be connected to the processor, such that the processor may read or write information from or to the storage medium. Alternatively, the storage medium may be incorporated into the processor. The processor and the storage medium may be present in the ASIC. The ASIC may be present in the user terminal. Alternatively, the processor and storage medium may exist as separate components in the user terminal.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or devices, and storage may be similarly influenced across a plurality of devices. Such devices may include PCs, network servers, and portable apparatus.

Although the present disclosure has been described in connection with some aspects herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A method (1100) performed by one or more processors, the method comprising:
Receiving (S 1110) a first dot associated with a first object;
based on the first dot, generating (S1120), using an image generation model (120), a first synthesized image (130); and
outputting the first synthesized image (130),
wherein the first dot comprises first class information and information indicating a first position associated with the first object, and
wherein the first synthesized image (130) is a synthesized image in which the first object corresponding to the first class information is placed at the first position.

2. The method according (1100) to claim 1, wherein a background of the first synthesized image (130) is determined based on the first class information and the information indicating the first position.

3. The method according (1100) to claim 2, wherein a size of the first object is determined based on the background of the first synthesized image (130), the first class information, and the information indicating the first position.

4. The method according (1100) to claim 1, further comprising receiving a second dot associated with a second object, wherein
the second dot comprises second class information and information indicating a second position associated with the second object, and
the first synthesized image (130) is a synthesized image in which the first object corresponding to the first class information is placed at the first position and the second object corresponding to the second class information is placed at the second position.

5. The method according (1100) to claim 4, wherein a background of the first synthesized image (130) is determined based on the first class information, the information indicating the first position, the second class information, and the information indicating the second position.

6. The method according (1100) to claim 4, wherein
the second dot further comprises size information of the second object,
a size of the second object placed in the first synthesized image (130) is determined based on the size information of the second object, and
a size of the first object placed in the first synthesized image (130) is determined based on a background of the first synthesized image (130), the first class information, the information indicating the first position, the second class information, the information indicating the second position, and the size information of the second object.

7. The method according (1100) to claim 4, further comprising:
receiving an input to remove the second dot; and
based on the first dot, generating, using the image generation model (120), a second synthesized image, wherein
the second synthesized image is a synthesized image, from which the second object has been removed, that comprises the first object.

8. The method according (1100) to claim 4, further comprising:
receiving an input to change the second class information associated with the second dot to third class information; and
based on the first dot and the second dot, generating, using the image generation model (120), a third synthesized image, wherein
the third synthesized image is a synthesized image in which the first object corresponding to the first class information is placed at the first position and a third object corresponding to the third class information is placed at the second position.

9. The method according (1100) to claim 1, wherein the first dot is generated by a user selecting a specific position on a display and inputting class information associated with the specific position.

10. The method according (1100) to claim 1, wherein the generating the first synthesized image (130) comprises:
receiving condition information associated with the first object; and
based on the first dot and the condition information, generating, using the image generation model (120), the first synthesized image (130) , and
the condition information represents structural information of a background and objects in the first synthesized image (130).

11. The method according (1100) to claim 10, wherein the condition information comprises at least one of text prompt information, collage information, image information, layout information, bounding box information, or edge information.

12. The method according (1100) to claim 1, wherein the image generation model (120) is trained by:
receiving a training segmentation map and a training image corresponding to the training segmentation map;
extracting, based on the training segmentation map, training dot data;
using pairs of the training dot data and the training image as training data; and
training, based on the training data, the image generation model (120).

13. A non-transitory computer-readable recording medium storing instructions for causing performance of the method (1100) according to claim 1 on a computer.

14. An apparatus comprising:
a communication interface;
a memory; and
one or more processors coupled to the memory and configured to execute one or more computer-readable programs stored in the memory, wherein
the one or more computer-readable programs comprise instructions that, when executed by the one or more processors, are configured to cause the apparatus to:
receive a first dot associated with a first object;
based on the first dot, generate, using an image generation model (120), a first synthesized image (130); and
output the first synthesized image (130),
wherein the first dot comprises first class information and information indicating a first position associated with the first object, and
wherein the first synthesized image (130) is a synthesized image in which the first object corresponding to the first class information is placed at the first position.
